# EUROPEAN PATENT SPECIFICATION

(11) **EP 1 862 078 B1**
(45) Date of publication and mention of the grant of the patent: **10.04.2013**
(21) Application number: 06712825.6
(22) Date of filing: 01.02.2006
(51) Int. Cl.: A23G 1/02, A23N 12/10

(54) **CHOCOLATE AND METHOD OF PRODUCING THE SAME**
SCHOKOLADE UND VERFAHREN ZU IHRER HERSTELLUNG
CHOCOLAT ET PROCEDE DE FABRICATION DE CELUI-CI

(30) Priority: 01.02.2005 JP 2005025574
(43) Date of publication of application: 05.12.2007
(73) Proprietor: Grapestone Co., Ltd., Tokyo 166-0004 (JP); Daitocacao Co., Ltd., Tokyo 153-0064 (JP); Union Coffee Roasters Co., Ltd., Ibaraki-city, Osaka 567-0053 (JP)
(72) Inventor: OGINO, Atsushi, uginami-ku, Tokyo, 1660004 (JP); TAKEUCHI, Hiromitu, uro-ku, Tokyo, 1530064 (JP); TAKEDA, Taro, a-cho, Ibaraki-city, Osaka, 5670053 (JP)
(74) Representative: Klingseisen, Franz
(86) International application number: PCT/JP2006/301682
(87) International publication number: WO 2006/092922

(56) References cited:
- JP-A- 01 034 247
- JP-A- 04 093 642
- JP-A- 59 224 653
- JP-A- 62 051 951
- JP-A- 2003 306 691
- DATABASE WPI Week 200369 Derwent Publications Ltd., London, GB; AN 2003-725150 XP002469394 & JP 2003 169654 A (YODOGAWA ENG KK) 17 June 2003 (2003-06-17)
- DATABASE WPI Week 198946 Derwent Publications Ltd., London, GB; AN 1989-337002 XP002469395 & JP 01 252250 A (KANEBO KUJI KK) 6 October 1989 (1989-10-06)
- DATABASE WPI Week 200349 Derwent Publications Ltd., London, GB; AN 2003-516578 XP002469396 & JP 2003 047405 A (TOHO KK) 18 February 2003 (2003-02-18)
- SCHIEBERLE P. ET AL.: 'Characterization of key odorants in chocolate' FLAVOR CHEM. 1999, pages 147 - 153, XP002995965

## Description

### TECHNICAL FIELD

The present invention relates to a chocolate product having a delicate taste and a method for producing the same.

### BACKGROUND ART

Chocolate contains cacao mass, cacao butter, powdered milk, sugar, and others as main ingredients, and the word "chocolate" is derived from xocolatl, which represents a beverage in ancient Mexico. Xocolatl was prepared by roasting and grinding cacao beans in an earthenware vessel, and Cortes, who had destroyed Aztec, introduced it into Spain where the Spanish devised addition of sugar to xocolatl. Since then, chocolate generally contained sugar.

Then, the method for preparing chocolate came to Italy and France, and the chocolate spread as a fashionable drink between the nobles. This new drink then spread over the whole of Europe, and, in the 19th century, a number of chocolate manufacturers appeared. Further, in addition to the chocolate as a drink, there had been developed eating chocolate including so-called chocolate bar, which was prepared by adding milk to cacao butter obtained by pressing the beans.

In our country, chocolate was imported from Europe for the first time early in the Meiji era, and spread all over the country in the Taisho era, and, particularly after the World War II, chocolate industries rapidly grew. Consequently, the techniques for chocolate production advanced, and a variety of chocolate products were developed.

Recently, chocolate is being eaten not only in an independent form of, for example, a chocolate bar but also in a combined form with another sweets, such as doughnut, cake, cream puff, eclair, or ice cream. The chocolate is rich in nutrition and contains much polyphenol and caffeine, and is attracting attention particularly as new health food due to the relaxation effect of theobromine obtained when eating the chocolate or the dopamine release effect obtained when smelling the aroma of cacao.

A method for producing a chocolate product, which is commonly used currently, is described below (see, for example, Patent Document 1).

First, impurities, such as stone pieces, are removed from cacao beans, and the beans are roasted at 110 to 170°C. The unroasted raw cacao beans have no so-called cocoa flavor. During the roasting for raw beans or raw nibs, the beans or nibs obtain a base flavor of chocolate, and, simultaneously, they are granulated to facilitate the fractionation into cell, nib, germ, and others.

According to the producing areas of cacao beans having individual characteristic features, cacao beans can be classified into, for example, base beans produced in Africa or Brazil as a base of chocolate, and flavor beans produced in Trinidad, Sri Lanka, Venezuela, or Ecuador as a flavoring for chocolate. Generally, the temperature of roasting the base beans is relatively high, and the temperature of roasting the flavor beans is relatively low.

The thus roasted cacao beans are granulated and fractionated into cell, nib, germ, and others, and then the cacao nibs are milled into a paste by means of a grinding mill or a roll mill. This paste material is called cacao mass, or bitter chocolate in general trade.

Next, sugar, and cocoa butter, powdered milk, or others are blended in appropriate amounts into the above-prepared cacao mass, and the resultant mixture is further milled by rolls so that the particles of ingredients are reduced in size, followed by cooling and molding, thus obtaining a chocolate product.
Patent Document 1: Japanese Unexamined Patent Publication No. Hei 7-143851

### Disclosure of the Invention

### Problem to be Solved by the Invention

With respect to the step for roasting cacao beans in the above-mentioned production method for chocolate, there has conventionally been known a method in which the cacao beans are indirectly heated and roasted using hot air utilizing the heat of steam or gas. This method can indirectly heat the cacao beans, and hence the cacao beans are not roasted to excess and can be uniformly roasted. The chocolate produced using this roasting method can emphasize a chocolate taste, and the consumers were in favor of this chocolate for many years.

However, in recent years, there are increasing consumers who desire a delicate and higher-quality taste in the chocolate or consumers who prefer chocolate having reduced a bitter taste, which is sensed in a conventional chocolate product, and further having improved a fruit flavor and a nut flavor.

Accordingly, the present invention has been made with a view to solving the above problems, and an object is to provide a chocolate product having a delicate and higher-quality taste and further having improved both a fruit flavor and a nut flavor, and a method for producing the same.

JP 2003-169654 A specifies a coffee bean roasting apparatus having a roasting container, an agitator with a stirring blade coated with ceramic slades, hot air holes and an upper roasting-grinding chamber with an exhaust port. Multiple burners are provided below the roasting container.

JP 01-2522250 A specifies a roasting method for coffee beans, wherein the coffee beans are roasted by direct fire of charcoal using a net-type rotating drum.

JP 2003-047405 A specifies the preparation of roasted coffee beans having a specified color tone wherein raw coffee beans are roasted with charcoal in a closed damper of a roasting machine, the roasted coffee beans are further roasted with charcoal in an open damper of the roasting machine, and are repeatedly cooled.

### Means for Solving the Problem

For solving the above problems, the method for producing a chocolate product according to claim 1 comprises the step of roasting cacao beans with the heat of charcoal fire.

The chocolate product of the present application contains trimethylpyrazine in an amount of 0.18 to 0.22% by weight and/or tetramethylpyrazine in an amount of 0.73 to 0.83% by weight, based on the weight of the chocolate product.

### Effect of the Invention

In the present invention, chocolate is produced through the step for roasting cacao beans with the heat of charcoal fire, and hence the whole of the cacao beans are not uniformly roasted, and both an aroma component caused by over-roasting and an aroma component caused by under-roasting are present. Therefore, as compared to cacao beans roasted by a general roasting method, cacao beans roasted in the present invention have added a sweet aroma derived from charcoal, and further have reduced various unnecessary flavors and thus have a delicate taste.

### BEST MODE FOR CARRYING OUT THE INVENTION

Hereinbelow, the best mode of the method for producing a chocolate product of the present invention will be described in detail with reference to the accompanying drawings.

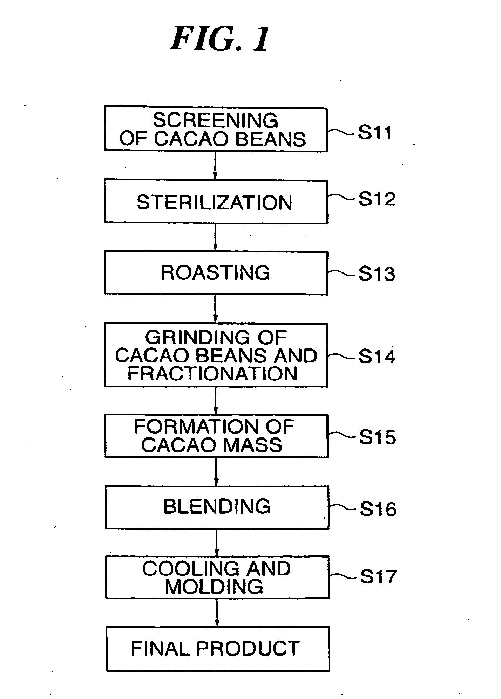

The method for producing a chocolate product is achieved according to a flowchart of Fig. 1.

First, in step S11, screening of cacao beans, which are a raw material, is conducted. The aim of step S11 is to remove defective beans and impurities, such as sand, metal pieces, and small stone pieces, and extract only good beans, but the aim is not limited to this. In step S11, for example, according to the producing areas of cacao beans having individual characteristic features, the cacao beans may be classified into, for example, base beans produced in Africa or Brazil as a base of chocolate, and flavor beans produced in Trinidad, Sri Lanka, Venezuela, or Ecuador as a flavoring for chocolate. Alternatively, the screening of cacao beans may be conducted simply in respect of the bean diameter optimal for the subsequent roasting step.

Then, the procedure goes to step S12. In step S12, the cacao beans selected in step S11 are exposed to dried steam at about 4 atm to sterilize the surfaces of the cacao beans, and they are dried with hot air at a temperature as high as 110 to 140°C for 15 to 20 minutes, thus removing bacteria unsuitable for food.

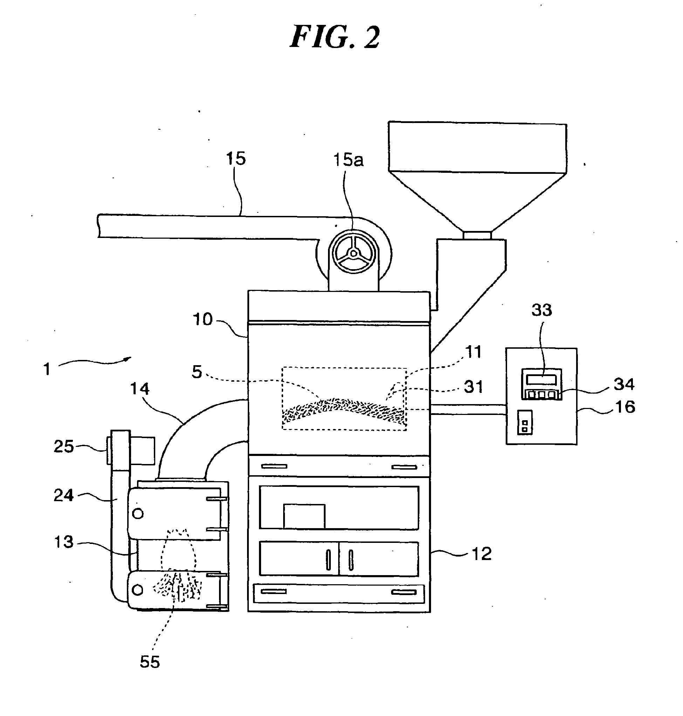

Next, the procedure goes to step S13, and the cacao beans are roasted. In this roasting step, for example, charcoal roaster 1 shown in Fig. 2 is used. The charcoal roaster 1 comprises a far infrared heater 10, a roasting drum 11, formed in the far infrared heater 10, for containing therein cacao beans 5 to be roasted, a gas stove 12 disposed just under a roasting drum 11, a charcoal kiln 13 for containing therein a charcoal 55 for charcoal fire, a pipe 14 laid from the charcoal kiln 13 to the side of the far infrared heater 10, a damper 15 for evacuating the far infrared heater 10, and a control unit 16 for controlling the whole apparatus.

The far infrared heater 10 serves as a device for keeping the periphery of the roasting drum 11 at a desired temperature during the actual roasting of the cacao beans 5.

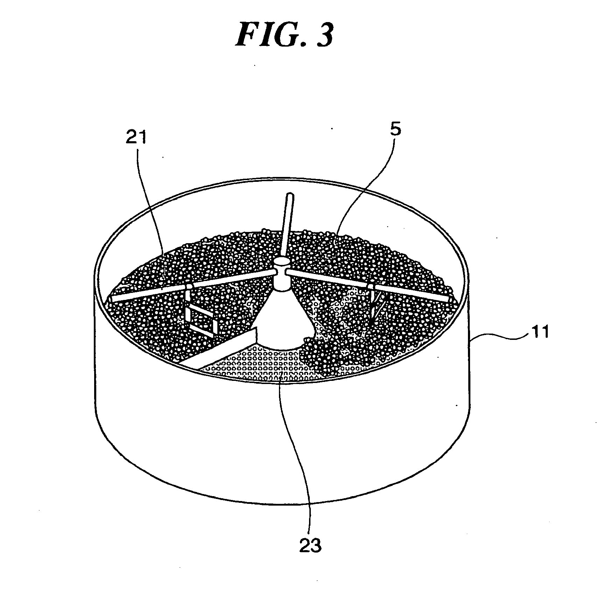

As shown in Fig. 3, the roasting drum 11 has an ability to agitate the cacao beans 5 contained therein using an automatic agitator 21. A great number of small pores 23 may be formed in the bottom of the roasting drum 11, so that the heat is directly transferred to the cacao beans 5, thus making it possible to add a charcoal flavor to the beans and further to expose the cacao beans 5 directly to the heating power of gas stove 12 or charcoal kiln 13. For improving the roasting efficiency, the amount of cacao beans 5 contained in the roasting drum 11 may be 15 kg or less.

The gas stove 12 is prepared to arbitrarily control the temperature in the far infrared heater 10. The heat generated by the gas stove 12 is not actually used in the roasting in step S13, but the gas stove can be used to indirectly heat and roast the cacao beans 5 contained in the roasting drum 11 utilizing the heat of gas, and therefore the preparation of the gas stove 12 in the charcoal roaster 1 improves the general-purpose properties of the roaster.

The charcoal kiln 13 has an air fan 24 for allowing the charcoal 55 contained to actually make a fire, and a charcoal fire blower 25 for actually controlling the temperature of the charcoal fire. In this step S13, the heat obtained by burning the charcoal 55 in the charcoal kiln 13 is used as a heat source. The heat generated in the charcoal kiln 13 is transferred to the far infrared heater 10 through the pipe 14, and the fire of the charcoal 55 is passed through the pipe 14 to the roasting drum 11 in the far infrared heater 10.

The damper 15 is provided for controlling the flow of air in the far infrared heater 10 by opening or closing a duct 15a. Specifically, when closing the duct 15a in the damper 15, the air in the far infrared heater 10 stops flowing, enabling long-time roasting with charcoal fire at a relatively low temperature. Consequently, the cacao beans 5 lower in the moisture content as their tissues expand to exhibit excellent aroma. On the other hand, when opening the duct 15a during the roasting, hot air can efficiently circulate in the far infrared heater 10, thus making it possible to permit the cacao beans 5 to pop and to vaporize moisture and remove unfavorable smell.

The control unit 16 comprises a thermocouple 31 disposed in the far infrared heater 10, a display section 33 for displaying a temperature measured based on the potential difference caused by the thermocouple 31, and a temperature control section 34 for sending a control signal to the charcoal fire blower provided in the charcoal kiln 13 to control the temperature in the far infrared heater 10.

The temperature control section 34 also has a programming function set by a user for the temperature in the far infrared heater 10 per unit time. When the program made by a user is allowed to run, the charcoal fire blower 25 in the charcoal kiln 13 operates in accordance with the instructions from the temperature control section 34 to control the temperature in the far infrared heater 10.

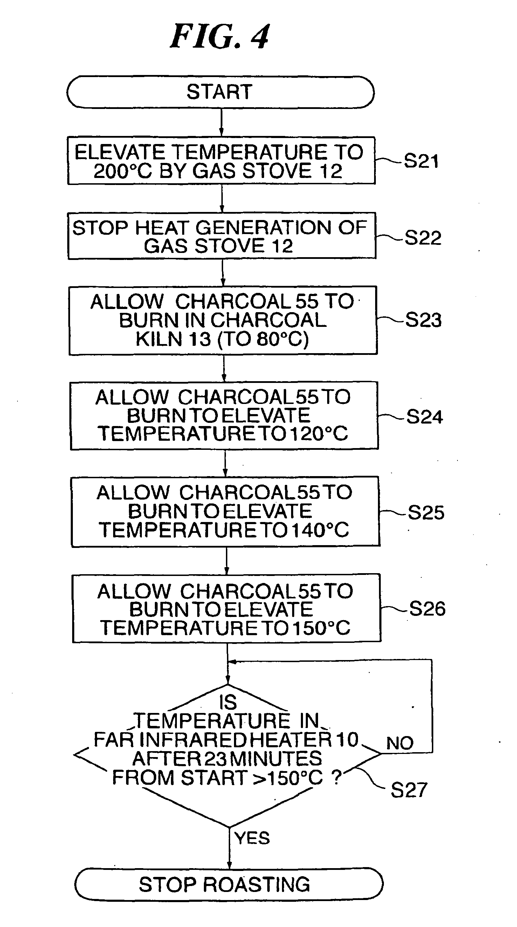

In the present invention, the roasting for the cacao beans 5 in step S13 is performed in accordance with the procedure shown in Fig. 4.

First, in step S21, heat is generated by the gas stove 12 to elevate the temperature in the far infrared heater 10 to 200°C.

Then, the procedure goes to step S22, and the heat generation of the gas stove 12 is stopped. The cacao beans 5 are then placed in the roasting drum 11 in a state such that the damper 15 is closed, and agitation of the beans by the automatic agitator 21 is started.

Next, the procedure goes to step S23, and the charcoal 55 is allowed to burn in the charcoal kiln 13, so that the heat of charcoal kiln 13 is transferred to the far infrared heater 10 through the pipe 14. When the temperature in the far infrared heater 10 exceeds 65°C, the damper 15 is opened. When the temperature in the far infrared heater 10 exceeds 80°C during the period of 5 minutes after placing the cacao beans 5 in the drum, the damper 15 is closed.

The procedure then goes to step S24, and the charcoal 55 is further allowed to burn in a state such that the damper 15 is opened. When the temperature in the far infrared heater 10 exceeds 120°C during the period of 10 minutes after placing the cacao beans 5 in the drum, the damper 15 is closed.

The procedure then goes to step S25, and the charcoal 55 is further allowed to burn in a state such that the damper 15 is opened. When the temperature in the far infrared heater 10 exceeds 140°C during the period of 15 minutes after placing the cacao beans 5 in the drum, the damper 15 is closed.

The procedure then goes to step S26, and the charcoal 55 is further allowed to burn in a state such that the damper 15 is opened. When the temperature in the far infrared heater 10 exceeds 150°C during the period of 20 minutes after placing the cacao beans 5 in the drum, the damper 15 is closed.

The procedure then goes to step S27, and, when the temperature in the far infrared heater 10 exceeds 150°C in a state such that the damper 15 is opened, the damper is closed, and the roasting is stopped about 23 minutes after placing the cacao beans in the drum.

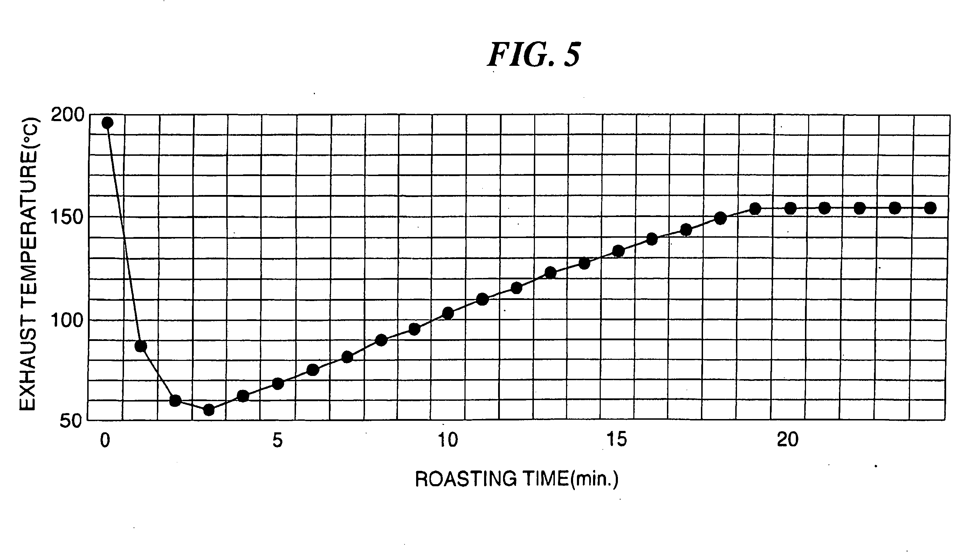

Fig. 5 shows the results of actual measurements of the exhaust temperature of the far infrared heater 10. The exhaust temperature of the far infrared heater 10 is considered to be a value directly reflecting the temperature in the far infrared heater 10. The results of actual measurements shown in Fig. 5 are merely an example, and, when the exhaust temperature relative to the roasting time has a margin of error within ±5°C, nearly desired roasting can be performed. Further, even when the roasting time has a margin of error of ±3 minutes, substantially the same roasting can be performed.

In the cacao beans 5 charcoal-roasted through the above-described steps, the whole of the beans are not uniformly roasted, and both an aroma component caused by over-roasting and an aroma component caused by under-roasting are present. Therefore, as compared to general roasted cacao beans 5,the charcoal-roasted cacao beans 5 have added a sweet aroma derived from charcoal, and further have reduced various unnecessary flavors and thus have a delicate taste.

In the roasting, the cacao beans 5 may be exposed directly to the fire from the charcoal kiln 13. In this case, not only can a sweet aroma derived from charcoal be further added to the cacao beans 5, but also the bean surfaces can be more surely roasted. Further, by exposing the cacao beans 5 directly to the charcoal fire, a so-called far infrared effect makes it possible to evenly and uniformly roast the cacao beans 5 including their insides without damaging the beans.

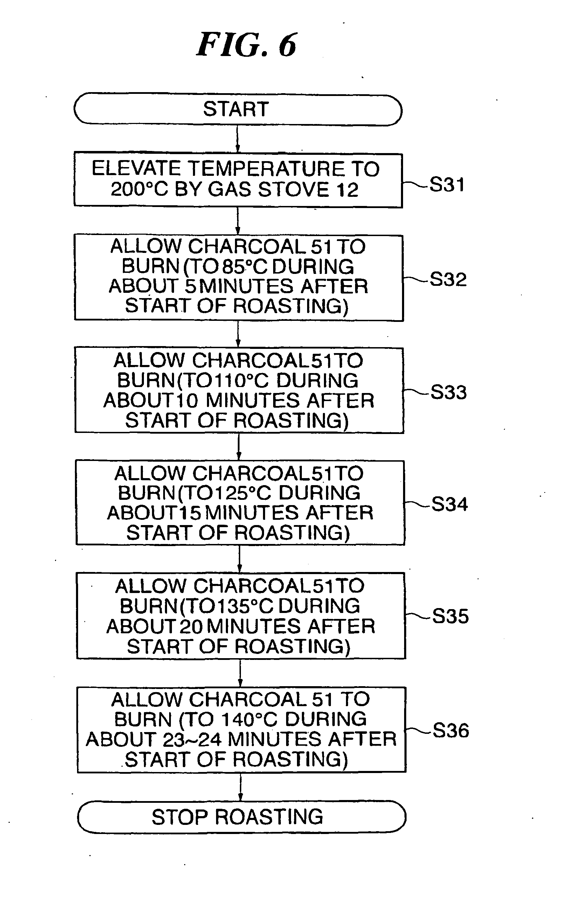

The roasting step for the cacao beans 5 in step S13 may be performed in accordance with, for example, the procedure shown in Fig. 6.

First, in step S31, heat is generated by the gas stove 12 to elevate the temperature in the far infrared heater 10 to about 200°C. In this instance, the heat of combustion of the charcoal 55 in the charcoal kiln 13 may also be used. In step S31, the cacao beans 5 are placed in the roasting drum 11, and agitation of the beans is started. Hereinafter, a point in time when the cacao beans 5 are placed in the roasting drum 11 is defined as the start of the roasting. The agitation is continued until later step S36 is completed. The temperature in the far infrared heater 10 is elevated to about 200°C, and then the heat generation of the gas stove 12 is stopped, so that the temperature in the far infrared heater 10 is lowered to about 70°C.

Then, the procedure goes to step S32, and the charcoal 55 is allowed to burn in the charcoal kiln 13, so that the heat of the charcoal kiln 13 is transferred to the far infrared heater 10 through the pipe 14. The amount of heat from the charcoal kiln 13 is controlled so that the temperature becomes about 85°C during the period of about 5 minutes after the start of the roasting. The amount of heat from the charcoal kiln 13 may be controlled by, for example, opening or closing the damper 15.

Next, the procedure goes to step S33, and the amount of heat from the charcoal kiln 13 is controlled so that the temperature becomes about 110°C during the period of about 10 minutes after the start of the roasting.

The procedure then goes to step S34, and the amount of heat from the charcoal kiln 13 is controlled so that the temperature becomes about 125°C during the period of about 15 minutes after the start of the roasting.

The procedure then goes to step S35, and the amount of heat from the charcoal kiln 13 is controlled so that the temperature becomes about 135°C during the period of about 20 minutes after the start of the roasting.

The procedure then goes to step S36, and the amount of heat from the charcoal kiln 13 is controlled so that the temperature becomes about 140°C during the period of about 23 to 24 minutes after the start of the roasting. The temperature control in each of steps S33 to S35 is made by opening or closing the damper 15. The cacao beans 5 are roasted for 23 to 24 minutes until the end of step S36 from the placing the beans in the drum, but the roasting time is not limited to this, and, for example, the roasting time may be in the range of 21 to 28 minutes from the start of the roasting, desirably, at least about 23 to 25 minutes from the start of the roasting.

The above-mentioned process of Fig. 6 shows merely an example of a yardstick of the temperature relative to the time lapse during the burning of charcoal, and the process is not limited to this.

For example, step S32 may be omitted. In this case, irrespective of whether the temperature becomes about 85°C during the period of about 5 minutes after the start of the roasting, in the next step S33, the amount of heat from the charcoal kiln 13 may be controlled so that the temperature becomes about 110°C as a yardstick during the period of about 10 minutes after the start of the roasting.

The temperature may be elevated using the charcoal fire at a rate of, for example, 5°C/minute during the period of about 10±2 to 3 minutes after the start of the roasting. In this case, the temperature elevation rate may have a margin of about 3 to 7°C/minute.

The temperature may be elevated using the charcoal fire at a rate of 2°C/minute from the time of about 15 minutes to the time of about 20 minutes after the start of the roasting. In this case, the temperature elevation rate may have a margin in the range of from about 0.5 to 3°C/minute, but it is desired that the temperature elevation is conducted at a rate in the range of from 1.5 to 2.5°C/minute.

The temperature may be elevated using the charcoal fire at a rate of 1.0 to 1.5°C/minute from the time of about 20 minutes to the time of about 23 to 24 minutes after the start of the roasting. In this case, the temperature elevation rate may have a margin in the range of from about 0.5 to 2.0°C/minute.

The temperature elevation is conducted at a relatively large rate, i.e., 5°C/minute during the period of about 10 minutes after the start of the roasting as mentioned above, thus making it possible to efficiently remove the moisture contained in the cacao beans 5. The temperature elevation is conducted using the charcoal fire at a relatively small rate, i.e., 2°C/minute from the time of about 15 minutes to the time of about 20 minutes after the start of the roasting, and at 1.0 to 1.5°C/minute from the time of about 20 minutes to the time of about 23 to 24 minutes after the start of the roasting.

By elevating the temperature at a relatively large rate during the period of about 10 minutes after the start of the roasting, the moisture contained in the cacao beans 5 can be efficiently removed. The removal of the moisture in the cacao beans 5 is very important to the flavors and taste to be described later.

In addition, by elevating the temperature at a relatively small rate from the time of about 15 minutes after the start of the roasting to the end of the roasting, a pleasant taste of chocolate can be obtained.

The explanation of Fig. 1 is made again. The roasting in step S13 is stopped, and then the procedure goes to step S14. In step S14, the roasted cacao beans 5 are granulated or ground, and subjected to fractionation to obtain cacao nibs.

The procedure goes to step S15, and the cacao nibs obtained are milled into a paste by means of a grinding mill or a roll mill. This paste material is called cacao mass.

Next, the procedure goes to step S16, and beet sugar, cocoa butter, lecithin, vanillin, and others are blended in appropriate amounts into the cacao mass prepared in step S15, and the resultant mixture is further milled by rolls so that the particles of ingredients are reduced in size.

In step S16, the mixture has a composition comprising 61 wt% of cacao mass, 36 wt% of beet sugar, 2.575 wt% of cocoa butter, 0.4 wt% of lecithin, and 0.025 wt% of vanillin, but the composition is not limited to this. For example, the mixture may have any composition as long as the composition comprises about 99 wt% of a combination of cacao mass, beet sugar, cocoa butter, and powdered whole milk, and about 1 wt% of an additive, such as an emulsion or a flavor.

Finally, the procedure goes to step S17, and the chocolate comprised of finely ground beans is kneaded by means of a machine called conche to adjust the taste. Then, the resultant chocolate is cooled and molded to obtain a chocolate product. In this case, the gloss and appearance of the chocolate surface and the inner tissues are adjusted (tempering) so that the taste and feel on the tongue become excellent, and the tempered liquid chocolate is placed in a mold having a form of plate, rod, circle, or rectangular or another form, and cooled through a cooling tunnel. Finally, the chocolate solidified in the mold is removed and wrapped. In this instance, for stabilizing the form of crystals of cocoa butter, the chocolate may be aged at a predetermined temperature.

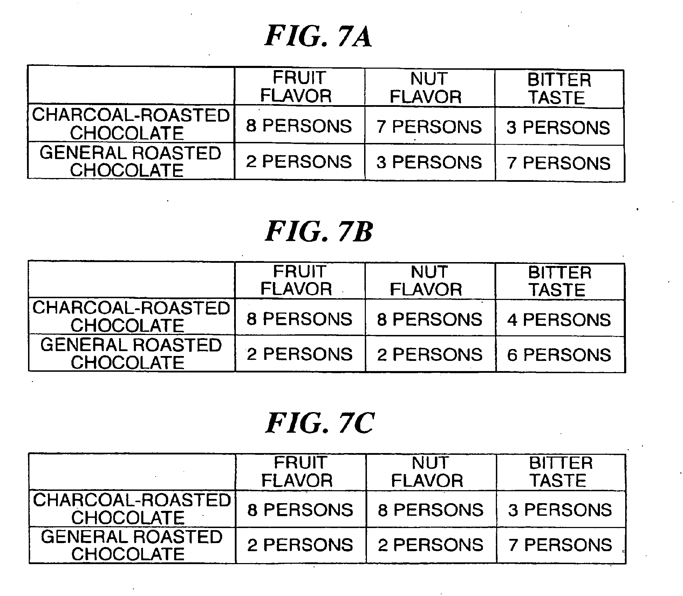

Fig. 7 shows the results of organoleptic examination with respect to the chocolate made of charcoal-roasted beans (charcoal-roasted chocolate) of the present invention and the chocolate having the same composition and being made of beans roasted using the heat of gas according to a conventional method (general roasted chocolate). In the organoleptic examination, 10 panelists compared and evaluated the charcoal-roasted chocolate and general roasted chocolate in respect of three items, i.e., fruit flavor, nut flavor, and bitter taste. This evaluation was repeated three times at appropriate intervals.

In the first organoleptic examination, as shown in Fig. 7(a), with respect to the fruit flavor, 8 persons felt it to the charcoal-roasted chocolate, and 2 persons felt it to the general roasted chocolate. With respect to the nut flavor, 7 persons felt it to the charcoal-roasted chocolate, and 3 persons felt it to the general roasted chocolate. With respect to the bitter taste, 3 persons felt it to the charcoal-roasted chocolate, and 7 persons felt it to the general roasted chocolate. In the second organoleptic examination, as shown in Fig. 7(b), with respect to the fruit flavor, 8 persons felt it to the charcoal-roasted chocolate, and 2 persons felt it to the general roasted chocolate. With respect to the nut flavor, 8 persons felt it to the charcoal-roasted chocolate, and 2 persons felt it to the general roasted chocolate. With respect to the bitter taste, 4 persons felt it to the charcoal-roasted chocolate, and 6 persons felt it to the general roasted chocolate. In the third organoleptic examination, as shown in Fig. 7(c), with respect to the fruit flavor, 8 persons felt it to the charcoal-roasted chocolate, and 2 persons felt it to the general roasted chocolate. With respect to the nut flavor, 8 persons felt it to the charcoal-roasted chocolate, and 2 persons felt it to the general roasted chocolate. With respect to the bitter taste, 3 persons felt it to the charcoal-roasted chocolate, and 7 persons felt it to the general roasted chocolate.

That is, the above organoleptic examination has confirmed that the charcoal-roasted chocolate has a strong fruit flavor, a strong nut flavor, and a weak bitter taste, as compared to the general roasted chocolate.

As can be seen from the results shown in Fig. 7, charcoal-roasted cacao beans 5 have both an aroma component caused by over-roasting and an aroma component caused by under-roasting, and therefore form a complicated aroma which cannot be felt to the general roasted chocolate. Especially a fruit flavor like an apple flavor and a strong nut flavor are emphasized, thus achieving a sharp and delicate taste.

In the present invention, in the roasting in step S13, Bincho charcoal may be used as charcoal 55. In this case, by virtue of the natural flavoring effect of Bincho charcoal, a sweet aroma and an excellent flavor can be added to cacao beans 5, thus achieving excellent flavor which cannot be obtained from any synthetic flavors.

In the present invention, in the above-mentioned step for roasting the cacao beans using the heat of charcoal fire, roasting the cacao beans at a temperature at least in the range of from 120 to 150°C can achieve a taste substantially similar to that mentioned above. When the roasting time is extended, roasting the cacao beans at a temperature at least in the range of from 90 to 150°C can achieve a taste substantially similar to that mentioned above.

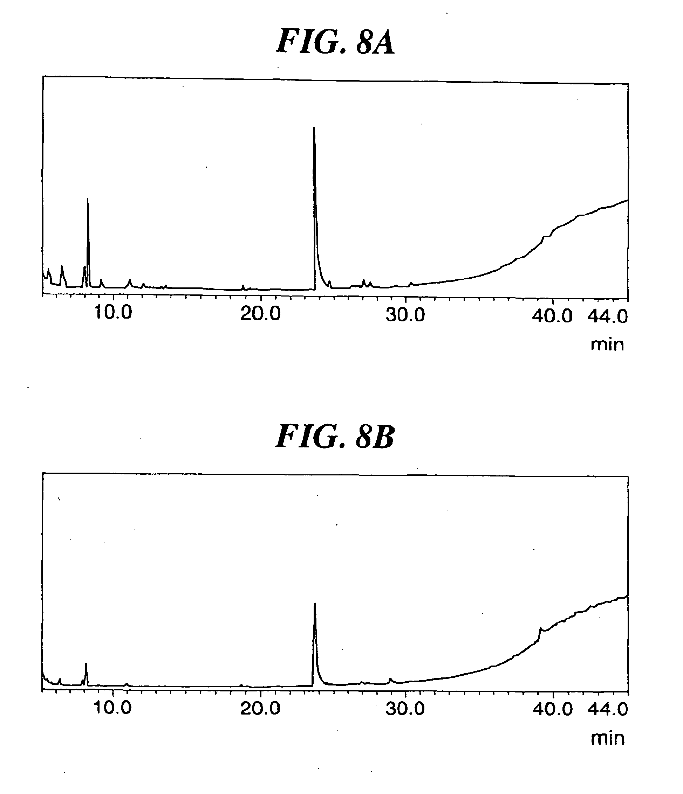

Fig. 8 shows the results of the measurement of gas chromatography (GCMS) with respect to the components of the charcoal-roasted chocolate produced by the above-described process. Fig. 8(a) shows the result of a GCMS analysis of the charcoal-roasted chocolate, and Fig. 8(b) shows the result of a GCMS analysis of the general roasted chocolate for comparison.

As a result, from the charcoal-roasted chocolate, 3-methylbutanal, ethanol, 2-pentyl acetate, 2-pentanol, isoamyl acetate, isoamyl alcohol, limonene, acetoin, trimethylpyrazine, acetic acid, tetramethylpyrazine, tiglic acid, vanillin, and others have been detected.

In contrast, from the general roasted chocolate, 3-methylbutanal, ethanol, limonene, acetoin, acetic acid, tetramethylpyrazine, vanillin, and others have been detected.

That is, the chromatograms indicate that the charcoal-roasted chocolate contains substances having higher detection sensitivity and aroma components in a larger amount than those of the general roasted chocolate. In the charcoal-roasted chocolate, a lower aldehyde and a lower alcohol, which are particularly important to the chocolate-like aroma, are detected in a larger amount, and the charcoal-roasted chocolate contains acetaldehyde in an amount of 1.11 to 1.21% by weight and/or ethanol in an amount of 16.81 to 17.49% by weight, based on the weight of the chocolate. Further, in the charcoal-roasted chocolate, a pyrazine, which causes the aroma of roasted beans, is detected in a larger amount, and the charcoal-roasted chocolate contains trimethylpyrazine in an amount of 0.18 to 0.22% by weight and/or tetramethylpyrazine in an amount of 0.73 to 0.83% by weight, based on the weight of the chocolate.

Thus, the substances identified by GCMS support the results of the above organoleptic examination.

### BRIEF DESCRIPTION OF THE DRAWINGS

[Fig. 1] Flowchart showing the method for producing a chocolate product of the present invention.
[Fig. 2] Diagram showing the construction of a charcoal roaster for roasting cacao beans.
[Fig. 3] Perspective view of a roasting drum.
[Fig. 4] Flowchart showing the detailed procedure of a roasting step.
[Fig. 5] Graph showing the results of actual measurements of the exhaust temperature of a far infrared heater.
[Fig. 6] Flowchart showing the detailed procedure of another roasting step.
[Fig. 7] Tables showing the results of organoleptic examination.
[Fig. 8] Diagrams showing the results of GCMS.

### Description of Reference Numerals

1: Charcoal roaster
5: Cacao beans
10: Far infrared heater
11: Roasting drum
12: Gas stove
13: Charcoal kiln
15: Duct
55: Charcoal

## Claims

1. A method for producing a chocolate product, comprising the ,step of roasting cacao beans with the heat of charcoal fire, wherein, in the roasting step, the cacao beans are roasted at 90 to 150°C, and have added a sweet aroma derived from charcoal.

2. The method according to claim 1, wherein, in the roasting step, the cacao beans are directly exposed to the charcoal fire.

3. The method according to claim 1, wherein the roasting step comprises a step for roasting the cacao beans at. 120°C, a step for roasting the cacao beans at 140°C, and a step for roasting the cacao beans at 150°C.

4. The method according to claim 1, wherein, in the roasting step, the cacao beans are roasted with the heat of charcoal fire at a temperature elevation rate of 3 to 7°C/ minute during the period of 10 ± 2 to 3 minutes after the start of the roasting, roasted with the heat of charcoal fire at a temperature elevation rate of 0.5 to 3°C/minute from the time of 15 minutes to the time of 20 minutes after the start of the roasting, and roasted with the heat of charcoal fire at a temperature elevation rate of 0.5. to 2.0°C/minute from the time of 20 minutes to the time of 23 to 24 minutes after the start of the roasting, and then the roasting step is stopped.

5. The method according to claim 1, wherein, in the roasting step, the cacao beans are roasted with the heat of charcoal fire at a temperature elevation rate of 3 to 7°C/minute during the period of 10 ± 2 to 3 minutes after the start of the roasting, roasted with the heat of charcoal fire at a temperature elevation rate of 1.5 to 2.5°C/minute from the tim of 15. minutes to the time of 20 minutes after the start of the roasting, and roasted with the heat of charcoal fire at a temperature elevation rate of 1.0 to 1.5°C/minute from the time of 20 minutes to the time of 23 to 24 minutes after the start of the roasting, and-then the roasting step is stopped.

## Patentansprüche

1. Verfahren zur Herstellung eines Schokoladeprodukts, umfassend den Schritt des Röstens von Kakaobohnen mit der Wärme eines Kohlefeuers, wobei in dem Röstschritt die Kakaobohnen bei 90 bis 150 °C geröstet werden und ein von Kohle abgeleitetes süßes Aroma zugesetzt wird

2. Verfahren nach Anspruch 1, wobei in dem Röstschritt die Kakaobohnen direkt dem Kohlefeuer ausgesetzt sind.

3. Verfahren nach Anspruch 1, wobei der Röstschritt einen Schritt zum Rösten der Kakaobohnen bei 120 °C, einen Schritt zum Rösten der Kakaobohnen bei 140 °C und einen Schritt zum Rösten der Kakaobohnen bei 150 °C umfasst

4. Verfahren nach Anspruch 1, wobei in dem Röstschritt die Kakaobohnen mit der Wärme von Kohlefeuer bei einer Temperatur-Erhöhungsrate von 3 bis 7°C/Minute während der Zeitspanne von 10 ± 2 bis 3 Minuten nach dem Start des Röstens geröstet werden, mit der Wärme von Kohlefeuer bei einer Temperatur-Erhöhungsrate von 0,5 bis 3°C/Minute von der Zeit von 15 Minuten zu der Zeit von 20 Minuten nach dem Start des Röstens geröstet werden, und mit der Wärme von Kohlefeuer bei einer Temperatur-Erhöhungsrate von 0,5 bis 2°C/Minute von der Zeit von 20 Minuten zu der Zeit von 23 bis 24 Minuten nach dem Start des Röstens geröstet werden, und dann der Röstschritt gestoppt wird.

5. Verfahren nach Anspruch 1, wobei in dem Röstschritt die Kakaobohnen mit der Wärme von Kohlefeuer bei einer Temperatur-Erhöhungsrate von 3 bis 7°C/Minute während der Zeitspanne von 10 ± 2 bis 3 Minuten nach dem Start des Röstens geröstet werden, mit der Wärme von Kohlefeuer bei einer Temperatur-Erhöhungsrate von 1,5 bis 2,5 °C/Minute von der Zeit von 15 Minuten zu der Zeit von 20 Minuten nach dem Start des Röstens geröstet werden und mit der Wärme von Kohlefeuer bei einer Temperatur-Erhöhungsrate von 1,0 bis 1,5 °C/Minute von der Zeit von 20 Minuten zu der Zeit von 23 bis 24 Minuten nach dem Starte des Röstens geröstet werden, und dann der Röstschritt gestoppt wird

## Revendications

1. Procédé de production d'un produit de chocolat comprenant l'étape consistant à torréfier les fèves de cacao à la chaleur d'un feu à charbon de bois, dans lequel, à l'étape de torréfaction, les fèves de cacao sont torréfiées de 90 à 150° C et elles acquièrent un arôme doux de charbon de bois.

2. Procédé selon la revendication 1, dans lequel, à l'étape de torréfaction, les fèves de cacao sont exposées directement au feu à charbon de bois.

3. Procédé selon la revendication 1, dans lequel l'étape de torréfaction comprend une étape de torréfaction des fèves de cacao à 120° C, une étape de torréfaction des fèves de cacao à 140° C et une étape de torréfaction des fèves de cacao à 150° C

4. Procédé selon la revendication 1, dans lequel, à l'étape de torréfaction, les fèves de cacao sont torréfiées à la chaleur d'un feu à charbon de bois à une vitesse d'augmentation de la température de 3 à 7° C/minute pendant la période de 10 ± 2 à 3 minutes après le début de la torréfaction, torréfiées à la chaleur d'un feu à charbon de bois à une vitesse d'augmentation de la température de 0,5 à 3° C/minute depuis le moment de 15 minutes au moment de 20 minutes après le début de la torréfaction, et torréfiées à la chaleur d'un feu à charbon de bois à une vitesse d'augmentation de la température de 0,5 à 2,0° C/minute depuis le moment de 20 minutes au moment de 23 à 24 minutes après le début de la torréfaction, puis l'étape de torréfaction est arrêtée.

5. Procédé selon la revendication 1, dans lequel, à l'étape de torréfaction, les fèves de cacao sont torréfiées à la chaleur d'un feu à charbon de bois à une vitesse d'augmentation de la température de 3 à 7° C/minute pendant la période de 10 ± 2 à 3 minutes après le début de la torréfaction, torréfiées à la chaleur d'un feu à charbon de bois à une vitesse d'augmentation de la température de 1,5 à 2,5° C/minute depuis le moment de 15 minutes au moment de 20 minutes après le début de la torréfaction, et torréfiées à la chaleur d'un feu à charbon de bois à une vitesse d'augmentation de la température de 1,0 à 1,5° C/minute depuis le moment de 20 minutes au moment de 23 à 24 minutes après le début de la torréfaction, puis l'étape de torréfaction est arrêtée.
